# EUROPEAN PATENT SPECIFICATION

(11) **EP 3 389 218 B1**
(45) Date of publication and mention of the grant of the patent: **19.06.2024**
(21) Application number: 16881055.4
(22) Date of filing: 21.12.2016
(51) Int. Cl.: H04L 12/14, H04W 4/24, H04M 15/00

(54) **DATA SERVICE CHARGING METHOD, DEVICE AND SYSTEM**
DATENDIENSTLADEVERFAHREN, -VORRICHTUNG UND -SYSTEM
PROCÉDÉ, DISPOSITIF ET SYSTÈME DE FACTURATION DE SERVICE DE DONNÉES

(30) Priority: 31.12.2015 CN 201511028359; 25.03.2016 CN 201610178261
(43) Date of publication of application: 17.10.2018
(73) Proprietor: Huawei Technologies Co., Ltd., Longgang District Shenzhen, Guangdong 518129 (CN)
(72) Inventor: CHAI, Xiaoqian, Shenzhen Guangdong 518129 (CN)
(74) Representative: Gill Jennings & Every LLP
(86) International application number: PCT/CN2016/111340
(87) International publication number: WO 2017/114266

(56) References cited:
- EP-A1- 2 456 122
- EP-A1- 2 947 816
- WO-A1-2011/101021
- WO-A1-2012/079647
- WO-A1-2015/131331
- WO-A1-2015/131331
- CN-A- 102 332 985
- CN-A- 102 884 757
- CN-A- 103 797 753
- CN-A- 105 188 043
- US-B2- 8 688 551
- "3rd Generation Partnership Project; Technical Specification Group Services and System Aspects; Telecommunication management; Charging management; Diameter charging applications (Release 13)", 3GPP STANDARD; 3GPP TS 32.299, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V13.1.0, 26 June 2015 (2015-06-26), pages 1-176, XP050966001, [retrieved on 2015-06-26]

## Description

### TECHNICAL FIELD

The present disclosure relates to the field of communications technologies, and specifically, to a data service charging method, an apparatus, and a system.

### BACKGROUND

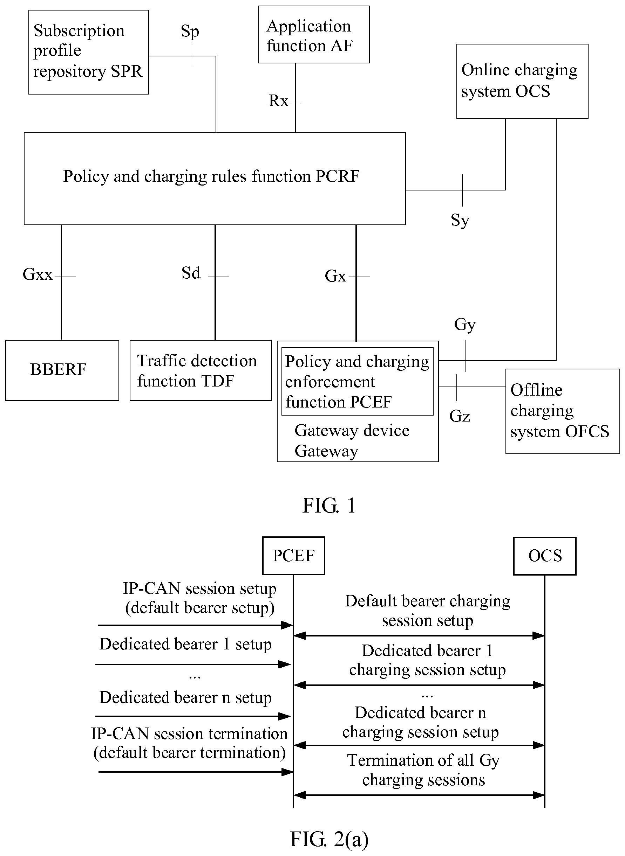

PCC (Policy and Charging Control, Policy and Charging Control) is a set of policy and charging control mechanisms defined by the 3GPP (3rd Generation Partnership Project, 3rd Generation Partnership Project). A PCC architecture is shown in FIG. 1. The architecture includes a policy and charging enforcement function (PCEF device, Policy and Charging Enforcement Function), a traffic detection function (TDF, Traffic Detection Function), a bearer binding and event reporting function (BBERF, Bearer Binding and Event Reporting Function), a policy and charging rules function (PCRF device, Policy and Charging Rules Function), an application function (AF, Application Function), an online charging system (OCS, Online charging system), an offline charging system (OFCS, Offline Charging System), and a subscription profile repository (SPR, Subscription Profile Repository). In the architecture, there are interfaces such as Gx, Sy, Gy, and Ro. Gx is an interface between the PCRF and the PCEF, Sy is an interface between the PCRF and the OCS, Gy is an online charging interface between the PCEF and the OCS, and Ro is a generic name for an online charging interface between a network element and the OCS. The PCEF device is a policy and charging enforcement entity and used to execute a dynamic or static control policy, and may be located in a gateway device such as a GGSN or a P-GW. The TDF is an application detection and control entity and used to execute an application detection and control policy delivered by the PCRF device. The PCRF device is a policy and charging rules function entity and responsible for control on, for example, QoS, bandwidth, gate control, and a charging policy in a home network when user equipment uses a service. The SPR is a subscription data storage entity and used to store subscription data of a user. When mapped onto an existing system, the SPR may be an entity such as an HLR, an HSS, or an OCS. In the mechanism, the PCRF entity performs policy decision (Policy Decision), generates a data-stream-based charging policy and control policy for the PCEF entity, and generates an application detection and application control policy for the TDF entity. Then, the PCRF entity installs an application activation control policy for the TDF entity and installs a stream-based control and charging policy for the PCEF entity. The PCEF entity initiates, according to the data-stream-based charging policy delivered by the PCRF entity, a data-stream-based credit quota application request message, that is, a credit control request (Credit Control Request, CCR) message, to the OCS (if a bearer is being set up, the PCEF entity initiates a charging session setup request message to the OCS). The OCS performs quota authorization and returns the credit authorization to the PCEF entity.

The PCEF and the OCS set up a charging session by using the Gy interface, that is, a Gy charging session is set up. In an evolved packet core (Evolved Packet Core, EPC) network, for a gateway, an interface between a serving gateway (Serving Gateway, S-GW) and a PDN gateway (PDN gateway, P-GW) is an S5 interface, and the interface may use different mobility management protocols. When the S5 interface uses the GPRS tunneling protocol (GPRS tunneling protocol, GTP), the PCEF sets up a charging session for each IP-connectivity access network bearer (IP-CAN bearer) or sets up a charging session for each IP-connectivity access network session (IP-CAN session). If the S5 interface uses the Proxy Mobile IP Protocol (Proxy Mobile IP Protocol, PMIP), the PCEF sets up a charging session for each IP-CAN session.

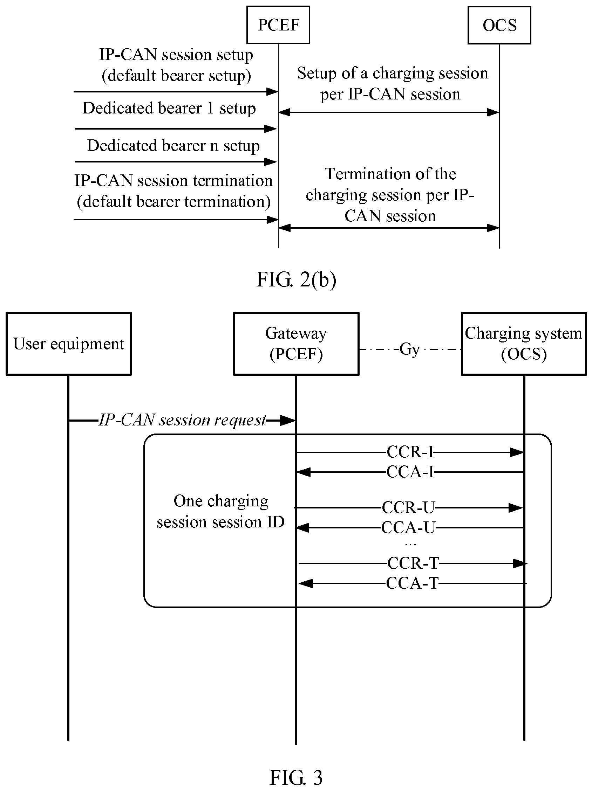

As shown in FIG. 2(a), one IP-CAN session may correspond to one or more charging sessions (each charging session corresponds to one bearer). In this case, one charging session (Charging Session) corresponds to one IP-CAN bearer, that is, charging session per IP-CAN bearer. In short, a charging session granularity is an IP-CAN bearer granularity or a bearer granularity. As shown in FIG. 2(b), one IP-CAN session corresponds to only one charging session. A charging session granularity is that one charging session corresponds to one IP-CAN session, that is, charging session per IP-CAN session. In short, a charging session granularity is an IP-CAN session granularity or a session granularity. The one charging session, as shown in FIG. 3, refers to a continuous process of a charging session between the PCEF and the OCS from sending a CCR-I (CCR initial message, that is, an initial message of CCR request session setup) to the OCS by the PCEF to sending a CCR-T (CCR termination message, that is, a CCR request session termination message) to the OCS by the PCEF. Each charging session has a unique session ID .

In the prior art, when a Gy interface is used for charging information transmission and processing, a charging session granularity of the Gy interface may be an IP-CAN session or an IP-CAN bearer. In actual deployment, it is likely that charging session granularities supported by a PCEF and an OCS/OFCS are different. In the case of two granularities, there is difference in a charging information collection mechanism, a charging information reporting occasion, or a charging information set. Therefore, if the two parties cannot agree on a charging session granularity, a charging processing error or inaccurate charging may occur. US8688551, 1 April 2014, discloses that a gateway device sends a credit request for an IP-CAN bearer to an OCS and that a gateway device sends a credit control request (CCR) for an IP-CAN session to an OCS. 3GPP TS 32.299 (V13.1.0), 26 June 2015, discloses that a gateway device sends "START session accounting data" to an offline charging system (OFCS) and that a gateway device sends an EVENT_RECORD to CDF server. EP2947816, 25 November 2015, discloses that a gateway device sends a charging session establishment request to an OCS or an accounting request to an OFCS. EP2456122, 23 May 2012, discloses that a gateway device sends a credit request to an OCS or a charging data request to an OFCS. WO 2015/131331, 11 September 2015, discloses when a gateway device interrupts or establishes a charging session for an IP-CAN bearer. CN105188043A, 23 December 2015, discloses that a gateway device reports charging information to offline charging system, wherein the charging information includes indication information, which is used to indicate a charging level corresponding to a charging event generated by the user equipment on the PDN connection.

### SUMMARY

Implementations of the present disclosure provide a data service charging method, an apparatus, and a system. When different mobility management protocols at an S5 interface may result in two different charging session granularities between a gateway and a charging system, more accurate charging can be achieved by using a mechanism of a charging session granularity negotiation between a gateway device and a charging device.

The invention has been defined in the independent claims. Further specific technical features have been defined in the dependent claims.

It may be learned from the foregoing solutions in the implementations of the present disclosure that, according to the present disclosure, if the offline charging system supports simultaneously two charging session granularities, when charging information is being reported, a granularity of the reported charging information is indicated, so that the charging system processes a call detail record according to the indication information, thereby improving charging accuracy.

### BRIEF DESCRIPTION OF DRAWINGS

FIG. 1 is a logical structural diagram of a policy and charging control system according to the prior art;
FIG. 2(a) is a schematic diagram of a case in which a charging session granularity is an IP-CAN bearer in the prior art;
FIG. 2(b) is a schematic diagram of a case in which a charging session granularity is an IP-CAN session in the prior art;
FIG. 3 is a schematic diagram of one charging session process between a PCEF and an OCS in the prior art;
FIG. 4 is a schematic diagram of a data service charging system architecture according to an implementation of the present disclosure;
FIG. 5 is a schematic diagram of a method for determining a charging session granularity by an OCS according to an implementation of the present disclosure;
FIG. 6 is a schematic diagram of a method for determining a charging session granularity by a PCEF according to an implementation of the present disclosure;
FIG. 7 is a schematic structural diagram of a gateway device according to an implementation of the present disclosure; and
FIG. 8 is a schematic structural diagram of a charging system according to an implementation of the present disclosure.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

A charging system in the present disclosure includes an online charging system (OCS) or an offline charging system (OFCS).

A gateway device in the present disclosure is a gateway at a network layer, including but not limited to, a GGSN, a P-GW, or the like. The gateway device includes a policy and charging enforcement function (PCEF) entity. In the implementations of the present disclosure, an entity may also be described as a device. Each entity may be a separate device, or may be a device that is disposed in another device. For example, a PCRF entity may be a PCRF device. A charging trigger function (CTF, Charging Trigger Function) is usually embedded in a network entity. For example, the PCEF may be used as the CTF and embedded in a P-GW.

According to a main idea of the present disclosure, in online charging, if the CTF may simultaneously support two charging session granularities, when setting up a charging session, the gateway device and the OCS negotiate a session granularity, and set up the charging session between the gateway device and the OCS according to the negotiated granularity; and in offline charging, if the CTF may simultaneously support two charging session granularities, when charging information is being reported, a granularity of the reported charging information is indicated, so that the OFCS processes a call detail record according to an indication information.

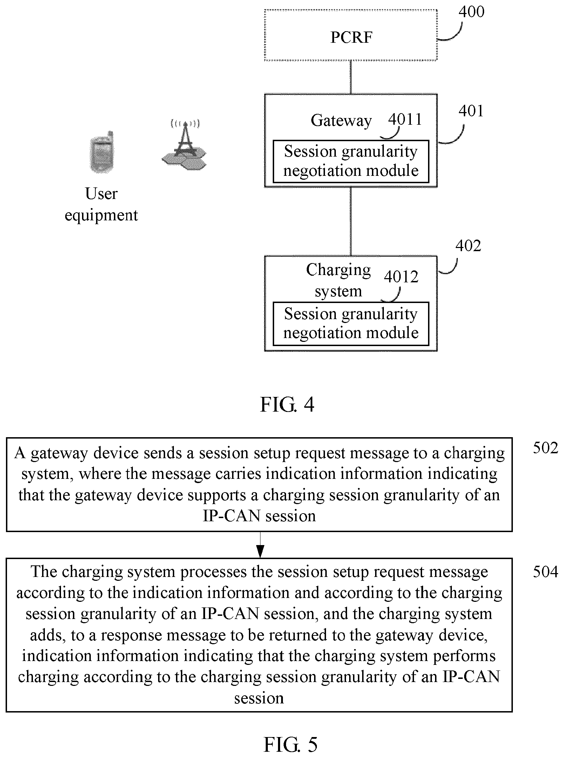

The implementations of the present disclosure may be implemented based on a PCC architecture shown in FIG. 1. For actual networking, refer to FIG. 4. FIG. 4 is a schematic diagram of an actual network architecture according to an implementation of the present disclosure. Network elements that are improved in this implementation of the present disclosure mainly include a gateway 401 (including a PCEF function) and a charging system 402 (including an OCS function). The gateway 401 and the charging system 402 include corresponding session granularity negotiation modules 4011 and 4012, respectively.

Specifically, the session granularity negotiation module 4011 in the gateway 401 is configured to send a session setup request message, that is, a CCR message, to the charging system 402. The CCR message carries indication information indicating that the gateway 401 supports a charging session granularity of an IP-CAN session, or carries indication information indicating that the gateway 401 uses a charging session granularity of an IP-CAN session to perform session charging. The session granularity negotiation module 4011 may be further configured to receive a response message returned by the charging system 402. The response message carries indication information indicating that the charging system 402 determines to perform session charging according to the charging session granularity of an IP-CAN session.

The session granularity negotiation module 4012 in the charging system 402 is configured to receive the session setup request message, that is the CCR message, sent by the gateway 401. The CCR message carries the indication information indicating that the gateway 401 supports the charging session granularity of an IP-CAN session, or carries the indication information indicating that the gateway 401 uses the charging session granularity of an IP-CAN session to perform session charging. The session granularity negotiation module 4012 is further configured to return the response message to the gateway 401. When the CCR message received by the charging system 402 includes the indication information indicating that the gateway 401 supports the charging session granularity of an IP-CAN session, the response message returned to the gateway 401 may carry the indication information indicating that the charging system 402 determines to perform session charging according to the charging session granularity of an IP-CAN session.

According to the gateway and the charging system in the implementations of the present disclosure, when setting up a charging session, the gateway and the charging system can negotiate a charging session granularity, and set up the charging session between the gateway and the charging system according to the negotiated granularity, thereby avoiding inconsistent processing of charging information in the case of two granularities, and improving charging accuracy and charging efficiency.

The following uses online charging as an example to illustrate a solution of an implementation of the present disclosure. In this implementation, a gateway device (including a PCEF function) reports a supported charging session granularity capability, and an OCS determines a charging session granularity. A gateway 401 and a charging system 402 shown in FIG. 4 may be configured to implement a method in this implementation of the present disclosure.

In this implementation, the gateway device may set up multiple IP-CAN bearers for one IP-CAN session, each IP-CAN bearer corresponds to one session setup request message, which may also be referred to as a credit control request (credit control request, CCR)-initial message, that is, a CCR-I message. Therefore, a PCEF may simultaneously report multiple CCR-I messages to the OCS. In this case, refer to a schematic method flowchart shown in FIG. 5 according to an implementation of the present disclosure. A specific method procedure is described as follows:
First, the gateway device receives an IP-CAN session setup request sent by user equipment UE. After the gateway device determines, according to a PCC rule delivered by a PCRF, an IP-CAN bearer to be set up, the gateway device performs the following steps.

Step 502: The gateway device sends a charging session setup request message of an IP-CAN bearer, for example, a CCR-I message, to the online charging apparatus OCS, where the session setup request message carries indication information of a charging session granularity supported by the gateway device, for example, a granularity of an IP-CAN session.

Specifically, the gateway device sends the CCR-I message to the OCS for each IP-CAN bearer, so as to set up a Gy interface charging session and to request authorization. The gateway device uses, for example, a session granularity negotiation module 4011 in FIG. 4, to add a parameter to the CCR-I message to indicate that the PCEF can support an IP-CAN session granularity Gy session, for example, a parameter A. The gateway device adds the parameter A to the to-be-sent Gy CCR-I request to indicate that the gateway device supports an IP-CAN session granularity charging session.

Specific methods for adding the parameter A to the CCR message by the gateway device PCEF may be as follows:
Method 1: The parameter A is added to a first CCR-I message. The OCS sets up, according to the parameter A carried in the first CCR-I message, a Gy session corresponding to the first CCR-I message, uses the Gy session as a Gy session of the IP-CAN session, and adds a parameter B to a CCA-I message that is returned to the gateway device and corresponds to the CCR-I message, to indicate, to the gateway device, that the current Gy session is used as the Gy session of the IP-CAN session. In this way, the gateway device binds, to the Gy session according to the parameter B, all bearers of the IP-CAN session that require online charging, and performs, in the session, quota application and charging information reporting corresponding to all the bearers in the entire IP-CAN session. The OCS rejects a subsequently received CCR-I request, and adds a rejection cause to a CCA-I message that is to be returned to the gateway device and corresponds to the CCR-I message. Preferably, the CCA-I message corresponding to the first CCR-I message is first returned to the gateway device. Preferably, if the gateway device simultaneously sends a CCR-I message of a default bearer and a CCR-I message of a dedicated bearer, the CCR-I message corresponding to the default bearer is considered as the first CCR-I message, the parameter A is added to the Gy CCR-I message of the default bearer, and the PCEF further adds a PDP context type (PDP Context Type) to the CCR-I message to indicate whether a current request corresponds to the default bearer.
Method 2: The parameter A is added to all CCR-I messages to be sent. The OCS receives, according to the parameter A, a first Gy CCR-I request, sets up a Gy session corresponding to the first CCR-I message, uses the Gy session as a Gy session of the IP-CAN session, and adds a parameter B to a CCA-I message that is returned to the gateway device and corresponds to the CCR-I message, to indicate, to the gateway device, that the current Gy session is used as the Gy session of the IP-CAN session. In this way, the gateway device binds, to the Gy session according to the parameter B, all bearers of the IP-CAN session that require online charging, and performs, in the session, quota application and charging information reporting corresponding to all the bearers in the entire IP-CAN session. The OCS rejects a subsequently received CCR-I request, and adds a rejection cause to a CCA-I message that is to be returned to the gateway device and corresponds to the CCR-I message. Preferably, the CCA-I message corresponding to the first CCR-I message is first returned to the gateway device. Preferably, if the gateway device simultaneously sends a CCR-I message of a default bearer and a CCR-I message of a dedicated bearer, the OCS considers the CCR-I message corresponding to the default bearer as the first CCR-I message, accepts a Gy CCR-I request of the default bearer according to the parameter A to set up a Gy session corresponding to the default bearer, uses the Gy session corresponding to the default bearer as a Gy session of the IP-CAN session, and rejects a CCR-I request of the dedicated (or referred to as dedicated) bearer. The PCEF adds a PDP context type to the CCR-I message to indicate whether the current session is for the default bearer. Each IP-CAN session has only one default bearer. A difference between the dedicated bearer and the default bearer lies in QoS and priorities.
Method 3: The gateway device PCEF first sends only one Gy CCR-I message, which carries the parameters A to indicate that the gateway device supports a session granularity. The OCS performs determining according to the parameter A, and if the OCS determines to use the session granularity this time, the OCS adds a parameter B to a CCA-I message to be returned to the gateway device to indicate, to the gateway device, that the current Gy session is used as a Gy session of the IP-CAN session. The gateway device binds, to the Gy session according to the parameter B, all bearers of the IP-CAN session that require online charging, and performs, in the session, quota application and charging information reporting corresponding to all the bearers in the entire IP-CAN session. If the OCS determines not to use the session granularity this time, the OCS does not indicate, in a CCA-I message returned to the gateway device, to the gateway device, that the current Gy session is used as a granularity of the IP-CAN session, and after receiving the CCA-I message, the gateway device uses the Gy session only as a Gy session of a corresponding bearer, and initiates a Gy session setup request (CCR-I) for another bearer that requires online charging. The parameter A is not added to all CCR-I messages sent this time. If the OCS cannot identify the parameter A, the OCS directly rejects the CCR-I message and returns an error code to the gateway device. After receiving the CCA-I message, the gateway device initiates a Gy session setup request (CCR-I) according to the error code for all bearers (including a current bearer) that require online charging. The parameter A is not added to all CCR-I messages sent this time. Preferably, if the gateway device determines that an online charging session needs to be set up for a default bearer and a dedicated bearer at the same time, only a Gy CCR-I message corresponding to the default bearer is sent for the first time. According to Method 3, the OCS can avoid complex processing.

Specifically, capability indication information, carried in the CCR-I message, of supporting a session charging session granularity may be shown in the following example:

```
<CCR>
              [Service-Information]
                   [PS-Information]
                         [PS-Information-Level]//Parameter A
```

The parameter A indicates the gateway device supports the charging session granularity of an IP-CAN session. If there is no parameter A, the charging session granularity is an IP-CAN bearer by default.

Step 504: The online charging system OCS processes the session setup request message according to the indication information, so as to set up a charging session of a corresponding granularity.

That the online charging system OCS processes the session setup request message according to the indication information specifically includes:
the OCS learns, according to the indication information, that a capability of the gateway device supports an IP-CAN session granularity charging session, and further determines a granularity of the charging session this time according to a capability of the OCS and a decision mechanism. A specific process is as follows:
If it is determined that a charging session granularity this time is an IP-CAN session granularity charging session, the OCS performs processing according to the charging session of an IP-CAN session granularity, and adds a parameter B to a CCA-I message to be returned to the gateway device to indicate that the Gy charging session is used as the charging session of an IP-CAN session granularity. For example, a response message is returned to a gateway 401 by using a session granularity negotiation module 4012 in a charging system in FIG. 4, and the response message returned to the gateway 401 carries indication information indicating that a charging system 402 determines to perform charging according to the charging session granularity of an IP-CAN session.

A specific example method in which the parameter B is added to the CCA-I message is as follows:

```
<CCA>
              [Service-Information]
                   [PS-Information]
                         [PS-Information-Level]//Parameter B
```

The parameter B indicates that the OCS determines to use a charging session of an IP-CAN session granularity. If there is no parameter B, the OCS uses the charging session granularity of an IP-CAN bearer by default.

If the OCS cannot identify the parameter A, the OCS ignores the parameter A and performs processing according to a granularity of an IP-CAN bearer. Alternatively, if the OCS cannot identify the parameter A, the OCS rejects the CCR-I request and returns an error code to the PCEF to indicate that the parameter cannot be identified. Alternatively, although the parameter A can be identified, if the capability of the OCS does not support a session granularity charging session, or although the capability of the OCS supports a session granularity charging session, if the OCS determines not to use a session granularity charging session according to an internal policy of the OCS or a subscription relationship of a user, the OCS ignores the parameter A, and performs processing according to a bearer granularity Gy session.

Further, if the OCS simultaneously receives multiple Gy session CCR-I messages (greater than or equal to 2 messages) of a same IP-CAN session that are sent by the gateway device and determines that an IP-CAN session granularity charging session is to be set up, the OCS rejects another CCR-I message, and the gateway device associates another bearer with the Gy session that is set up. Alternatively, if the OCS simultaneously receives multiple Gy session CCR-I messages, the OCS rejects another CCR-I message and indicates, in a CCA message, a redirection to a Gy session that is set up (carrying a destination Gy session ID), and the gateway device associates the bearer with a Gy session corresponding to the session ID.

Further, if the gateway device has not received the CCA after the OCS returns the CCA, the gateway device initiates a new CCR-I request. If the OCS determines that a session granularity charging session is to be set up, and a session granularity Gy session is already set up, the OCS rejects the CCR-I charging session request, and optionally, indicates, in a CCA message, a redirection to the Gy session that is set up (carrying the destination Gy session ID).

Further, if the OCS simultaneously receives multiple Gy CCR-I messages, the OCS first processes a Gy CCR-I message corresponding to a default session.

Further, that the OCS performs processing according to the session granularity Gy specifically includes that the OCS allocates a quota for a quota application in the received multiple CCR-I messages, returns the allocated quota to the gateway device in a CCA-I message of the session granularity Gy session to be set up, and rejects another CCR-I request in a CCA-I message corresponding to the another CCR-I message.

In the solution in this implementation of the present disclosure, indication information indicating that the gateway device supports a charging session granularity of an IP-CAN session is added to a session request message sent by the gateway device to the OCS, so that the OCS can learn of a support status of the gateway device for the charging session granularity and perform corresponding processing. If the OCS determines, according to the indication information, to process the charging session according to the charging session granularity of an IP-CAN session, the OCS adds, to a response message to be returned to the gateway device, indication information indicating that the OCS performs charging according to the charging session granularity of an IP-CAN session. Therefore, when setting up a charging session, the gateway device and the OCS can negotiate a charging session granularity, and set up the charging session between the gateway device and the OCS according to the negotiated granularity, thereby avoiding inconsistent processing of charging information in the case of two granularities, and improving charging accuracy and charging efficiency. In this implementation, the OCS determines a to-be-used charging session granularity according to a charging session granularity support status reported by the gateway device, thereby alleviating decision burden on the PCRF.

The following continues to use online charging as an example to illustrate an implementation solution of determining a Gy interface charging session granularity by a gateway device (including a PCEF function). A gateway 401 and a charging system 402 shown in FIG. 4 may be configured to implement a method of an implementation of the present disclosure.

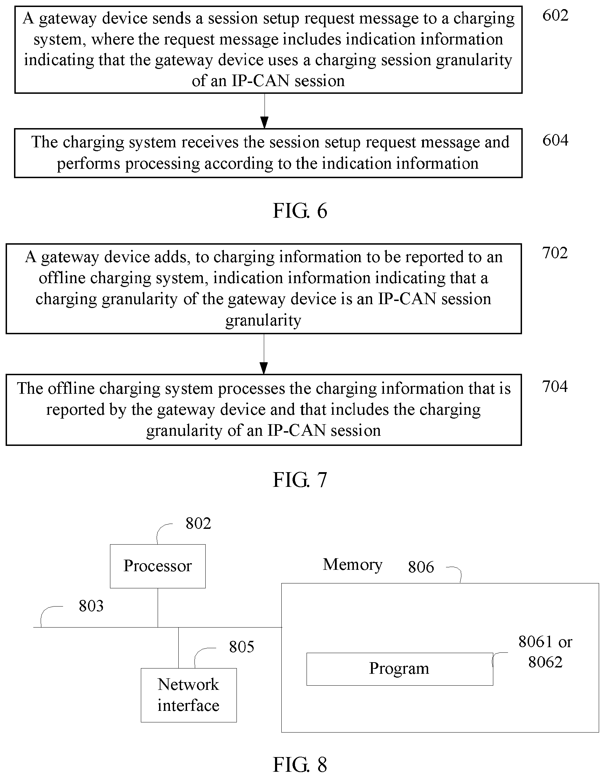

In this implementation, a gateway device determines the Gy charging session granularity, and when determining that only one Gy charging session is set up for one IP-CAN session, the gateway device may initiate only one Gy CCR-I message to an OCS, thereby avoiding simultaneously reporting multiple Gy CCR-I request messages. Referring to a flowchart shown in FIG. 6, a specific method is described as follows.

Step 602: The gateway device sends a charging session setup request message of an IP-CAN session to the charging system OCS, where the request message includes charging session granularity indication information indicating that the charging session is an IP-CAN session granularity charging session.

Specifically, the PCEF determines, according to a configuration of the PCEF or a PCRF instruction, to set up a session granularity Gy for the IP-CAN session and initiates a Gy session setup request to the OCS. The CCR-I request uses a specific AVP to indicate that the current CCR-I message is a request message of the session granularity charging session. A carried parameter corresponds to the session granularity charging session, and a requested quota may be used for multiple bearers.

The gateway device may determine, according to a configuration of the gateway device, such as a charging characteristic configuration, a granularity of a charging session that needs to be set up. Alternatively, a PCRF (for example, a PCRF 400 shown in FIG. 4) in a home domain or a visited domain determines a granularity of a charging session initiated by the gateway device PCEF and delivers the granularity of the charging session to the gateway device PCEF by using a PCC rule. The PCEF determines the Gy interface charging session granularity according to the PCC rule.

Step 604: The OCS receives the session setup request message and processes the CCR-I message according to the indication information.

Specifically,
if the OCS agrees to use the session granularity charging session, the OCS normally processes the session setup request message CCR-I, and returns a session setup success message.

If the OCS does not support the charging session granularity indication information, or the OCS supports the charging session granularity indication information but does not accept setup of a session granularity charging session according to the configuration, the OCS rejects the charging session request and returns an error code indicating that identification fails or a session granularity Gy session cannot be set up.

After receiving a failure response message from the OCS, the gateway device determines, according to an error code carried in a CCA-I message, that a bearer granularity charging session needs to be set up, and re-initiates a Gy charging session request of the bearer granularity for each IP-CAN bearer in the IP-CAN session.

In the solution in this implementation of the present disclosure, indication information indicating that the gateway device uses a charging session granularity of an IP-CAN session to perform session charging is added to a session request message sent by the gateway device to the OCS, so that the OCS can learn of a charging session granularity that the gateway device determines to use, and performs corresponding processing according to the indication information. Therefore, when setting up a charging session, the gateway device and the OCS can negotiate a charging session granularity, and set up the charging session between the gateway device and the OCS according to the negotiated granularity, thereby avoiding inconsistent processing of charging information in the case of two granularities, and improving charging accuracy and charging efficiency. Further, in the solution, the gateway device PCEF determines a to-be-used charging session granularity, thereby enhancing autonomy of the gateway device PCEF, and alleviating burden on the OCS.

An implementation of the present disclosure further provides an implementation solution of determining a charging information collection granularity by a gateway device PCEF in the case of offline charging (OFCS). A method flowchart is shown in FIG. 7. This implementation may be implemented if a charging system 402 in FIG. 4 is an offline charging system.

Step 702: The gateway device adds, to charging information to be reported to the offline charging system, indication information indicating that the reported charging information is charging information of a charging session per IP-CAN session.

Specifically, if an ACR (Accounting Request) message is used for charging information reporting, a parameter C is added to an ACR report command to indicate that the reported charging information is charging information of a charging session at a granularity of per IP-CAN session or charging information of a charging session at a granularity of per IP-CAN bearer . If the parameter does not exist, the charging information is charging information of a charging session at a granularity of per IP-CAN bearer by default. After receiving the ACR that carries the parameter and is sent by the PCEF, a CDF (Charging Data Function) module generates a CDR (Call Detail Record, call detail record) according to the indication information, and adds a parameter D with a same function to the CDR. In this way, when processing the call detail record, the charging system determines, according to the field, that information in the CDR is charging information of a charging session at a granularity of per IP-CAN session or charging information of a charging session at a granularity of per IP-CAN bearer, and performs correct CDR processing, for example, deduplication, merge, association, or rating.

If the PCEF directly generates a CDR, a parameter D with a same function is added to the generated CDR to indicate that the reported charging information is charging information of a charging session at a granularity of per IP-CAN session or charging information of a charging session at a granularity of per IP-CAN bearer. Alternatively, if the parameter does not exist, the charging information is charging information of a charging session at a granularity of per IP-CAN bearer by default. In this way, when processing the call detail record, the charging system determines, according to the field, that information in the CDR is charging information of a charging session at a granularity of per IP-CAN session or charging information of a charging session at a granularity of per IP-CAN bearer, and performs correct CDR processing, for example, deduplication, merge, association, or rating.

A specific example method in which the parameter C is added to the ACR command is as follows:

```
           <ACR>
              [Service-Information]
                   [PS-Information]
                         [PS-Information-Level]//Parameter C
```

The parameter D added to the CDR is as follows:

| | | |
|---|---|---|
| CDR Level | OC | The parameter indicates that reported charging information is charging information of a charging session at a granularity of per IP-CAN session or charging information of a charging session at a granularity of per IP-CAN bearer. Alternatively, if the parameter does not exist, charging information is charging information of a charging session at a granularity of per IP-CAN bearer by default. |

Step 704: The offline charging system processes the charging information that is reported by the gateway device and that is charging information of a charging session at a granularity of per IP-CAN session.

Specifically, when processing a call detail record, the offline charging system, for example, the charging system 402 in FIG. 4 (which is an offline charging system in this case) determines, according to the field added to the charging information in step 702, that is, according to a charging session granularity information identifier field, that information in the call detail record is charging information of a charging session at a granularity of per IP-CAN session , and performs further processing. Certainly, if the added field is empty, the charging information is charging information of a charging session at a granularity of per IP-CAN bearer by default.

The gateway device may determine, according to a configuration of the gateway device, such as a charging characteristic configuration, a charging session granularity (which is the IP-CAN session granularity charging information or the IP-CAN bearer granularity charging information) to be reported. Alternatively, a PCRF (such as a PCRF 400 in FIG. 4) in a home domain or a visited domain determines the charging session granularity reported by the PCEF.

In this implementation, if the offline charging system may simultaneously support two charging session granularities, when charging information is being reported, a granularity of a charging session of the reported charging information is indicated. The offline charging system processes a call detail record according to the indication information, thereby ensuring charging accuracy and improving charging efficiency.

FIG. 8 shows a structure of a gateway device (including a PCEF function) according to another implementation of the present disclosure. The gateway device may be configured to perform the steps in all the foregoing described method implementations. The gateway device may be a gateway 401 in FIG. 4, including at least one processor 802 (for example, a CPU), at least one network interface 805 or another communications interface, a memory 806, and at least one communications bus 803 used for connection and communication between these apparatuses. The processor 802 is configured to execute an executable module, such as computer program, stored in the memory 806. The memory 806 may include a high-speed random access memory (RAM: random access memory), or may further include a non-volatile memory (non-volatile memory), such as at least one magnetic disk storage. Communicative connection between the gateway device and at least one another network element is implemented by using at least one network interface 805 (which may be a wired or wireless interface), and the Internet, a wide area network, a local area network, a metropolitan area network, and the like may be used.

This implementation of the present disclosure further provides a computer program product and a storage medium that stores the foregoing computer program. The computer program product includes program code stored in a computer readable storage medium, and the program code is loaded by using the processor to implement the foregoing method. In some implementations, the memory 806 stores a program 8061, and the program 8061 may be executed by the processor 802. This program includes:
sending, by the gateway device, a session setup request message to an online charging system, where the session setup request message carries indication information indicating that the gateway device supports a charging session granularity of an IP-CAN session; and
receiving, by the gateway device, a response message returned by the online charging system, where the response message carries indication information indicating that the online charging system performs charging according to the charging session granularity of an IP-CAN session.

Alternatively,
the program includes:
sending, by the gateway device, a session setup request message to an online charging system, where the request message carries indication information indicating that the gateway device uses a charging session granularity of an IP-CAN session; and
receiving, by the gateway device, a session setup success message returned by the online charging system.

An online charging system (including an OCS function) provided in another implementation of the present disclosure also includes a hardware architecture similar to that in FIG. 7. The online charging system may be an online charging system 402 in FIG. 4, and may be configured to perform the steps in all the foregoing method implementations. A memory 806 stores a program 8062, and the program 8062 may be executed by a processor 802. This program includes:
receiving, by the online charging system, a session setup request message sent by a gateway device, where the request message carries indication information indicating that the gateway device supports a charging session granularity of an IP-CAN session; and
processing, by the online charging system, the session setup request message according to the indication information and according to the charging session granularity of an IP-CAN session, and adding, to a response message to be returned to the gateway device, indication information indicating that the online charging system performs charging according to the charging session granularity of an IP-CAN session.

Alternatively, this program includes:
receiving, by the online charging system, a session setup request message sent by a gateway device, where the request message carries indication information indicating that the gateway device uses a charging session granularity of an IP-CAN session; and
returning, by the online charging system, a session setup success message to the gateway device.

It may be learned from the foregoing solutions provided in the implementations of the present disclosure that, if the OCS may simultaneously support two charging session granularities, when setting up a charging session, the gateway device and the OCS negotiate a session granularity, and set up the charging session between the gateway device and the OCS according to the negotiated granularity, thereby avoiding inconsistent processing of charging information in the case of two granularities, and improving charging accuracy and charging efficiency.

The scope of protection shall be defined by the appended claims.

## Claims

1. A data service charging method, applied to a gateway device, the method comprising:
sending charging information to an offline charging system, wherein the charging information is of a charging session that is between the gateway device and the offline charging system and the charging information comprises indication information for indicating whether a granularity of the charging information is a granularity of per Internet Protocol-connectivity access network, IP-CAN, session, or at a granularity of per IP-CAN bearer;
wherein:
the sending charging information to the offline charging system comprises sending an Accounting Request, ACR, message to the offline charging system, the ACR message comprises the charging information, and a Packet Switched-Information-Level, PS-Information-Level, field, comprised in a PS-Information field comprised in the ACR message, comprises the indication information, wherein that the ACR message comprises the charging information specifically comprises that a parameter C is added to an ACR message to indicate that the charging information of the charging session is at the granularity of per IP-CAN session or the charging information of the charging session at a granularity of per IP-CAN bearer, and wherein if the parameter C is empty, the charging information of the charging session is at the granularity of per IP-CAN bearer by default; or
the sending charging information to the offline charging system comprises generating Call Detail Record, CDR, information and sending the CDR information to the offline charging system, the CDR information comprises the charging information, and a CDR Level field, comprised in the CDR information, comprises the indication information, wherein that the CDR information comprises the charging information specifically comprises that a parameter D is added to the CDR information to indicate that the charging information of the charging session is at the granularity of per IP-CAN session or the charging information of the charging session at a granularity of per IP-CAN bearer, and wherein if the parameter D is empty, the charging information of the charging session is at the granularity of per IP-CAN bearer by default.

2. A data service charging method, applied to an offline charging system, the method comprising:
receiving, from a gateway device, charging information, wherein the charging information is of a charging session that is between the gateway device and the offline charging system and the charging information comprises indication information for indicating whether a granularity of the charging information is a granularity of per Internet Protocol-connectivity access network, IP-CAN, session, or at a granularity of per IP-CAN bearer; and
processing the charging information according to the indication information;
wherein:
the receiving charging information from the gateway device comprises receiving an Accounting Request, ACR, message from the gateway device, the ACR message comprises the charging information, and a Packet Switched-Information-Level, PS-Information-Level, field, comprised in a PS-Information field comprised in the ACR message, comprises the indication information, wherein that the ACR message comprises the charging information specifically comprises that a parameter C is added to an ACR message to indicate that the charging information of the charging session is at the granularity of per IP-CAN session or the charging information of the charging session at a granularity of per IP-CAN bearer, and wherein if the parameter C is empty, the charging information of the charging session is at the granularity of per IP-CAN bearer by default; or
the receiving charging information from the gateway device comprises receiving Call Detail Record, CDR, information from the gateway device, the CDR information comprises the charging information, and a CDR Level field, comprised in the CDR information, comprises the indication information, wherein that the CDR information comprises the charging information specifically comprises that a parameter D is added to the CDR information to indicate that the charging information of the charging session is at the granularity of per IP-CAN session or the charging information of the charging session at a granularity of per IP-CAN bearer, and wherein if the parameter D is empty, the charging information of the charging session is at the granularity of per IP-CAN bearer by default.

3. A gateway device, comprising a processor and a memory, wherein:
the memory is configured to store a program instruction; and
the processor is configured to invoke and execute the program instruction stored in the memory, to enable the gateway device to perform the data service charging method according to claim 1.

4. An offline charging system, comprising a processor and a memory, wherein:
the memory is configured to store a program instruction; and
the processor is configured to invoke and execute the program instruction stored in the memory, to enable the offline charging system to perform the data service charging method according to claim 2.

5. A data service charging system, comprising a gateway device according to claim 3 and an offline charging system according to claim 4.

## Patentansprüche

1. Datendienst-Abrechnungsverfahren, das auf eine Gateway-Vorrichtung angewendet wird, wobei das Verfahren Folgendes umfasst:
Senden von Abrechnungsinformationen an ein Offline-Abrechnungssystem, wobei die Abrechnungsinformationen von einer Abrechnungssitzung stammen, die zwischen der Gateway-Vorrichtung und dem Offline-Abrechnungssystem stattfindet, und die Abrechnungsinformationen Angabeinformationen zum Angeben umfassen, ob eine Granularität der Abrechnungsinformationen eine Granularität per Internetprotokoll-Konnektivität-Zugangsnetzwerk-Sitzung (Internet Protocol-connectivity access network session, IP-CAN session) oder bei einer Granularität per IP-CAN-Träger ist;
wobei:
das Senden von Abrechnungsinformationen an das Offline-Abrechnungssystem Senden einer Kontoführungsanforderungsnachricht (Accounting Request message (ACR-message)) an das Offline-Abrechnungssystem umfasst, die ACR-Nachricht die Abrechnungsinformationen und ein Feld paketvermittelte Informationsebene (PS-Informationsebene) umfasst, das in einem PS-Informationsfeld umfasst ist, das in der ACR-Nachricht umfasst ist, die Angabeinformationen umfasst, wobei, dass die ACR-Nachricht die Abrechnungsinformationen umfasst, spezifisch umfasst, dass ein Parameter C zu einer ACR-Nachricht hinzugefügt wird, um anzugeben, dass die Abrechnungsinformationen der Abrechnungssitzung bei die Granularität per IP-CAN-Sitzung oder die Abrechnungsinformationen der Abrechnungssitzung bei einer Granularität per IP-CAN-Träger vorliegen, und wobei, wenn der Parameter C leer ist, die Abrechnungsinformationen der Abrechnungssitzung standardmäßig bei der Granularität per IP-CAN-Träger vorliegt; oder
das Senden von Abrechnungsinformationen an das Offline-Abrechnungssystem Erzeugen von Call Detail Record-Informationen (CDR-Informationen) und Senden der CDR-Informationen an das Offline-Abrechnungssystem umfasst, wobei die CDR-Informationen die Abrechnungsinformationen und ein Feld CDR-Ebene umfassen, das in den CDR-Informationen umfasst ist, die Angabeinformationen umfassen, wobei, dass die CDR-Informationen die Abrechnungsinformationen umfassen, spezifisch umfasst, dass ein Parameter D zu den CDR-Informationen hinzugefügt wird, um anzugeben, dass die Abrechnungsinformationen der Abrechnungssitzung bei der Granularität per IP-CAN-Sitzung oder die Abrechnungsinformationen der Abrechnungssitzung bei einer Granularität per IP-CAN-Träger vorliegen, und wobei, wenn der Parameter D leer ist, die Abrechnungsinformationen der Abrechnungssitzung standardmäßig bei der Granularität per IP-CAN-Träger vorliegen.

2. Datendienst-Abrechnungsverfahren, das auf ein Offline-Abrechnungssystem angewendet wird, wobei das Verfahren Folgendes umfasst:
Empfangen, von einer Gateway-Vorrichtung, von Abrechnungsinformationen, wobei die Abrechnungsinformationen aus einer Abrechnungssitzung stammen, die zwischen der Gateway-Vorrichtung und dem Offline-Abrechnungssystem stattfindet, und die Abrechnungsinformationen Angabeinformationen zum Angeben umfassen, ob eine Granularität der Abrechnungsinformationen eine Granularität per Internetprotokoll-Konnektivität-Zugangsnetzwerk-Sitzung (IP-CAN session) oder bei einer Granularität per IP-CAN-Träger ist; und
Verarbeiten der Abrechnungsinformationen gemäß den Angabeinformationen;
wobei:
das Empfangen von Abrechnungsinformationen von der Gateway-Vorrichtung Empfangen einer Kontoführungsanforderungsnachricht (ACR-Nachricht) von der Gateway-Vorrichtung umfasst, die ACR-Nachricht die Abrechnungsinformationen und ein Feld paketvermittelte Informationsebene (PS-Informationsebene) umfasst, das in einem PS-Informationsfeld umfasst ist, das in der ACR-Nachricht umfasst ist, die Angabeinformationen umfasst, wobei die ACR-Nachricht die Abrechnungsinformationen umfasst, spezifisch umfasst, dass ein Parameter C zu einer ACR-Nachricht hinzugefügt wird, um anzugeben, dass die Abrechnungsinformationen der Abrechnungssitzung bei der Granularität per IP-CAN-Sitzung oder die Abrechnungsinformationen der Abrechnungssitzung bei einer Granularität per IP-CAN-Träger vorliegen, und wobei, wenn der Parameter C leer ist, die Abrechnungsinformationen der Abrechnungssitzung standardmäßig bei der Granularität per IP-CAN-Träger vorliegen; oder
das Empfangen von Abrechnungsinformationen von der Gateway-Vorrichtung Empfangen von Call Detail Record-Information (CDR-Informationen) von der Gateway-Vorrichtung umfasst, wobei die CDR-Informationen die Abrechnungsinformationen und ein Feld CDR-Ebene umfassen, das in den CDR-Informationen umfasst ist, die Angabeinformationen umfassen, wobei, dass die CDR-Informationen die Abrechnungsinformationen umfassen, spezifisch umfasst, dass ein Parameter D zu den CDR-Informationen hinzugefügt wird, um anzugeben, dass die Abrechnungsinformationen der Abrechnungssitzung bei der Granularität per IP-CAN-Sitzung oder die Abrechnungsinformationen der Abrechnungssitzung bei einer Granularität per IP-CAN-Träger vorliegen, und wobei, wenn der Parameter D leer ist, die Abrechnungsinformationen der Abrechnungssitzung standardmäßig bei der Granularität per IP-CAN-Träger vorliegen.

3. Gateway-Vorrichtung, umfassend einen Prozessor und einen Speicher, wobei:
der Speicher konfiguriert ist, um eine Programmanweisung zu speichern; und
der Prozessor konfiguriert ist, um die in dem Speicher gespeicherte Programmanweisung aufzurufen und auszuführen, um der Gateway-Vorrichtung zu ermöglichen, das Datendienst-Abrechnungsverfahren nach Anspruch 1 durchzuführen.

4. Offline-Abrechnungssystem, umfassend einen Prozessor und einen Speicher, wobei:
der Speicher konfiguriert ist, um eine Programmanweisung zu speichern; und
der Prozessor konfiguriert ist, um die in dem Speicher gespeicherte Programmanweisung aufzurufen und auszuführen, um dem Offline-Abrechnungssystem zu ermöglichen, das Datendienst-Abrechnungsverfahren nach Anspruch 2 durchzuführen.

5. Datendienst-Abrechnungssystem, umfassend eine Gateway-Vorrichtung nach Anspruch 3 und ein Offline-Abrechnungssystem nach Anspruch 4.

## Revendications

1. Procédé de facturation de service de données, appliqué à un dispositif passerelle, le procédé comprenant :
l'envoi d'informations de facturation à un système de facturation hors ligne, dans lequel les informations de facturation sont celles d'une session de facturation qui se situe entre le dispositif passerelle et le système de facturation hors ligne et les informations de facturation comprennent des informations d'indication pour indiquer si une granularité des informations de facturation est une granularité de session sur réseau d'accès à connectivité par protocole Internet, IP-CAN, ou à une granularité de support IP-CAN ;
dans lequel :
l'envoi d'informations de facturation au système de facturation hors ligne comprend l'envoi d'un message de demande de comptabilité, ACR, au système de facturation hors ligne, le message ACR comprend les informations de facturation, et un champ de niveau d'information à commutation de paquets, niveau d'information PS, compris dans un champ d'informations PS compris dans le message ACR, comprend les informations d'indication, dans lequel le message ACR comprend les informations de facturation comprenant spécifiquement qu'un paramètre C est ajouté à un message ACR pour indiquer que les informations de facturation de la session de facturation sont à la granularité par session sur IP-CAN ou les informations de facturation de la session de facturation à une granularité de support IP-CAN, et dans lequel si le paramètre C est vide, les informations de facturation de la session de facturation sont à la granularité de support IP-CAN par défaut ; ou
l'envoi d'informations de facturation au système de facturation hors ligne comprend la génération d'informations d'enregistrement détaillé d'appel, CDR, et l'envoi des informations CDR au système de facturation hors ligne, les informations CDR comprennent les informations de facturation, et un champ de niveau CDR, compris dans les informations CDR, comprend les informations d'indication, dans lequel les informations CDR comprennent les informations de facturation comprenant spécifiquement qu'un paramètre D est ajouté aux informations CDR pour indiquer que les informations de facturation de la session de facturation sont à la granularité de session IP-CAN ou les informations de facturation de la session de facturation à une granularité de support IP-CAN, et dans lequel si le paramètre D est vide, les informations de facturation de la session de facturation sont à la granularité de support IP-CAN par défaut.

2. Procédé de facturation de service de données, appliqué à un système de facturation hors ligne, le procédé comprenant :
la réception, en provenance d'un dispositif passerelle, d'informations de facturation, dans lequel les informations de facturation sont celles d'une session de facturation qui se situe entre le dispositif passerelle et le système de facturation hors ligne et les informations de facturation comprennent des informations d'indication pour indiquer si une granularité des informations de facturation est une granularité de session sur réseau d'accès à connectivité par protocole Internet, IP-CAN, ou à une granularité de support IP-CAN ; et
le traitement des informations de facturation selon les informations d'indication ;
dans lequel :
la réception d'informations de facturation en provenance du dispositif passerelle comprend la réception d'un message de demande de comptabilité, ACR, en provenance du dispositif passerelle, le message ACR comprend les informations de facturation, et un champ de niveau d'information à commutation de paquets, niveau d'information PS, compris dans le champ d'information PS compris dans le message ACR comprend les informations d'indication, dans lequel le message ACR comprend les informations de facturation comprenant spécifiquement qu'un paramètre C est ajouté à un message ACR pour indiquer que les informations de facturation de la session de facturation sont à la granularité de session IP-CAN ou les informations de facturation de la session de facturation à une granularité de support IP-CAN, et dans lequel si le paramètre C est vide, les informations de facturation de la session de facturation sont à la granularité de support IP-CAN par défaut ; ou
la réception d'informations de facturation en provenance du dispositif passerelle comprend la réception d'informations d'enregistrement détaillé d'appel, CDR, en provenance du dispositif passerelle, les informations CDR comprennent les informations de facturation, et un champ de niveau CDR, compris dans les informations CDR, comprend les informations d'indication, dans lequel les informations CDR comprennent les informations de facturation comprenant spécifiquement qu'un paramètre D est ajouté aux informations CDR pour indiquer que les informations de facturation de la session de facturation sont à la granularité de session IP-CAN ou les informations de facturation de la session de facturation à une granularité de support IP-CAN, et dans lequel si le paramètre D est vide, les informations de facturation de la session de facturation sont à la granularité de support IP-CAN par défaut.

3. Dispositif passerelle, comprenant un processeur et une mémoire, dans lequel :
la mémoire est configurée pour stocker une instruction de programme ; et
le processeur est configuré pour appeler et exécuter l'instruction de programme stockée dans la mémoire, pour permettre au dispositif passerelle de réaliser le procédé de facturation de service de données selon la revendication 1.

4. Système de facturation hors ligne, comprenant un processeur et une mémoire, dans lequel :
la mémoire est configurée pour stocker une instruction de programme ; et
le processeur est configuré pour appeler et exécuter l'instruction de programme stockée dans la mémoire, pour permettre au système de facturation hors ligne de réaliser le procédé de facturation de service de données selon la revendication 2.

5. Système de facturation de service de données, comprenant un dispositif passerelle selon la revendication 3 et un système de facturation hors ligne selon la revendication 4.
